# EUROPÄISCHE PATENTSCHRIFT

(11) **EP 3 760 509 B1**
(45) Veröffentlichungstag und Bekanntmachung des Hinweises auf die Patenterteilung: **19.06.2024**
(21) Anmeldenummer: 20183750.7
(22) Anmeldetag: 02.07.2020
(51) Int. Cl.: B61H 5/00, F16D 65/097, F16D 69/04, F16D 55/224

(54) **BELAGHALTER FÜR EINE BREMSBELAGHALTERUNG EINES SCHIENENFAHRZEUGS**
LINING HOLDER FOR A BRAKE LINING SUPPORT OF A RAILWAY VEHICLE
PORTE-GARNITURE POUR UN SUPPORT DE GARNITURE DE FREIN D'UN VÉHICULE FERROVIAIRE

(30) Priorität: 05.07.2019 DE 102019118297
(43) Veröffentlichungstag der Anmeldung: 06.01.2021
(73) Patentinhaber: KNORR-BREMSE Systeme für Schienenfahrzeuge GmbH, 80809 München (DE)
(72) Erfinder: ELSTORPFF, Marc-Gregory, 80368 München (DE); MÜLLEK, Ferenc, 8000 Szekesfehervar (HU)

(56) Entgegenhaltungen:
- EP-A1- 2 587 086
- JP-B2- 4 498 641

## Beschreibung

Die vorliegende Erfindung betrifft einen Belaghalter für eine Bremsbelaghalterung eines Schienenfahrzeugs gemäß dem Oberbegriff des Anspruchs 1.

Die Erfindung betrifft des Weiteren eine Vorrichtung zum Vorspannen sowie eine Bremsbelaghalterung eines Schienenfahrzeugs.

Bremsbeläge für Scheibenbremsen von Schienenfahrzeugen werden üblicherweise von einem Belaghalter gehalten, der einen in der Regel schwalbenschwanzförmigen Führungskanal an seiner dem Bremsbelag zugewandten Andruckplatte aufweist, wobei der Bremsbelag mit einem an diesem angeformten ebenfalls schwalbenschwanzartig geformten Führungssteg in dem Führungskanal gehalten ist.

In Funktionsstellung ist zur Arretierung des Bremsbelags in Längsrichtung des Belaghalters ein Verschlussriegel schwenkbar an dem Belaghalter gehalten, der in einer Verriegelungsstellung in diesen Führungskanal vorsteht und in einer Freigabestellung aus dem Führungskanal entfernt ist, was eine einfache Montage und Demontage des Bremsbelags ermöglicht.

Eine solche gattungsgemäße Bremsbelaghalterung mit einem gattungsgemä-ßen Belaghalter ist beispielsweise aus der DE 10 2009 006 290 A1 bekannt.

Bei einem Bremsvorgang wird der Bremsbelag je nach Fahrtrichtung üblicherweise entweder in Richtung des Verschlussriegels oder in Richtung eines am anderen Ende des Führungskanals angeformten Anschlags gedrückt, hervorgerufen durch die Reibung zwischen Bremsscheibe und dem Bremsbelag.

Zur Montage der Bremsbeläge in die Führung, insbesondere Schwalbenschwanzführung des Belaghalters ist ein gewisses Spiel in Längsrichtung des Führungssteges notwendig, was den Nachteil hat, dass im Betrieb auch während der Fahrt ohne Bremsvorgang die Bremsbeläge vibrationsbedingt gegen den Anschlag bzw. den Verschlussriegel schlagen, was zu Verschleiß an den Auflageflächen der Bremsbeläge sowie am Führungskanal des Belaghalters und gegebenenfalls auch am Verschlussriegel führen kann.

Des Weiteren führt dieses Anschlagen auch zur Erzeugung unerwünschter Geräusche sowohl während eines Bremsvorgangs als auch bei Fahrt ohne Bremsung.

Aus der EP 2587086 A1 ist es bekannt, am Verschlussriegel eine Ausnehmung vorzusehen, in der ein federbelastetes Druckelement befestigt ist, das gegen den Bremsbelag in Längsrichtung des Führungskanals drückt.

Aus der JP 4 498641 B2 ist es bekannt, an der Andruckplatte eine Blattfeder zu befestigen, die senkrecht zur Längsrichtung eines Führungskanals der Andruckplatte einen Verschlussriegel in den Führungskanal drückt, um ein Herausfallen des Bremsbelags zu verhindern.

Aufgabe der vorliegenden Erfindung ist es, einen Belaghalter und eine Bremsbelaghalterung dahingehend weiterzuentwickeln, dass der durch das Spiel bedingte Verschleiß und die Geräuschentwicklung weiter reduziert werden. Weitere Aufgabe der Erfindung ist es, eine Vorrichtung zur Montage bereitzustellen, mit der ein Bremsbelag in einfacher und zuverlässiger Weise an dem Belaghalter montiert werden kann.

Die erste Aufgabe wird durch einen Belaghalter für eine Bremsbelaghalterung eines Schienenfahrzeugs mit den Merkmalen des Anspruchs 1 sowie durch eine Bremsbelaghalterung mit den Merkmalen des Anspruchs 9 gelöst.

Die zweite Aufgabe wird durch eine Vorrichtung mit den Merkmalen des Anspruchs 8 gelöst.

Der erfindungsgemäße Belaghalter für eine Bremsbelaghalterung eines Schienenfahrzeugs weist eine Andruckplatte mit einem sich in Längsrichtung des Belaghalters erstreckenden Führungskanal auf, in dem ein Bremsbelag verschiebbar und senkrecht zur Normalen der Andruckplatte formschlüssig festlegbar ist.

Der Belaghalter weist des Weiteren einen an der Andruckplatte gelagerten Verschlussriegel zur Arretierung des Bremsbelags in Längsrichtung des Belaghalters auf.

Der Verschlussriegel steht dabei in einer den Bremsbelag in einer Funktionsstellung fixierenden Verriegelungsstellung in den Führungskanal vor. In einer Freigabestellung ist der Verschlussriegel aus dem Führungskanal entfernt.

Zwischen einem in dem Führungskanal geführten Führungssteg des Bremsbelags und dem Verschlussriegel ist ein den Bremsbelag im Führungskanal vorspannendes Federelement angeordnet.

Der Verschlussriegel weist dabei einen zu einer Schwenk- oder Verschiebeebene des Verschlussriegels abgewinkelten Montagebereich auf, an dem ein Montageende des Federelements anliegend befestigt ist, wobei ein in den Führungskanal vorstehendes Ende unter Vorspannung am Führungssteg des Bremsbelags anliegt.

Mit einem solchen Federelement ist der Bremsbelag im Belaghalter gegen den Verschlussriegel elastisch vorgespannt und verhindert oder zumindest vermindert zuverlässig eine Relativbewegung zwischen Bremsbelag und n Belaghalter in Längsrichtung des Führungskanals des Belaghalters.

Dadurch wird insbesondere bei Fahrt ohne Bremsung der Anschlag des Führungskanals und auch der Verschlussriegel sowie die diesen nahen Enden des Bremsbelags zuverlässig vor Verschleiß geschützt.

Auch die Geräuschentwicklung durch Anschlagen des Bremsbelags an dem Anschlag und/oder dem Verschlussriegel wird mithilfe eines solchen Federelements wirksam reduziert oder sogar weitgehend verhindert.

Durch den abgewinkelten Montagebereich ist eine einfache Anbringung des Federelements am Verschlussriegel ermöglicht.

Vorteilhafte Ausführungsvarianten der Erfindung sind Gegenstand der Unteransprüche.

Gemäß einer vorteilhaften Ausführungsvariante ist das Federelement am Verschlussriegel fixiert.

Dadurch ist insbesondere die Montage des Bremsbelags im Belaghalter erleichtert, da das Federelement nicht separat am Belaghalter fixiert werden muss.

Das Federelement ist gemäß einer bevorzugten Ausführungsvariante als Blattfeder ausgebildet. Denkbar ist dabei die Ausbildung als einlagige Blattfeder und auch die Ausbildung des Federelements als mehrlagige Blattfeder, je nach gewünschter Federelastizität.

Zudem zeichnet sich die Ausführung des Federelements als Blattfeder durch seine einfache und kostengünstige Herstellung aus.

Dadurch ist eine einfache Anbringung des Federelements am Verschlussriegel ermöglicht.

Zur Fixierung des Federelements ist das Montageelement des Federelements gemäß einer vorteilhaften Weiterbildung am Montagebereich des Verschlussriegels angenietet oder auch stoffschlüssig befestigt, beispielsweise durch Verschweißen.

Gemäß einer alternativen Ausführungsvariante ist das Montageende des Federelements am Montagebereich des Verschlussriegels angeschraubt.

Gemäß einer weiteren Ausführungsvariante der Erfindung ist das als ein- oder mehrlagige Blattfeder ausgebildete Federelement mit einer am Verschlussriegelfixierten Drahtfeder an einer parallel zur Schwenk- oder Verschiebeebene des Verschlussriegels verlaufenden Fläche vorfixiert und mittels wenigstens einer das Montageende des Federelements mit dem Montagebereich des Verschlussriegels verbindenden Schraube in eine vorgespannte Stellung, bei der das in den Führungskanal vorstehende Ende des Federelements unter Vorspannung am Führungssteg des Bremsbelags anliegt, angezogen.

Diese Ausführungsvariante zeichnet sich durch eine mit Standardwerkzeugen ausführbare Montage und Vorspannung des Federelements beim Einbau und Ausbau des Bremsbelags am Belaghalter aus.

Die erfindungsgemäße Bremsbelaghalterung zeichnet sich durch einen wie oben beschriebenen Belaghalter aus.

Die erfindungsgemäße Vorrichtung zum Vorspannen eines Federelements eines wie oben beschriebenen Belaghalters zeichnet sich durch einen auf den Verschlussriegel und das an diesem fixierte Federelement überstülpbaren Bügel mit zwei über eine Brücke miteinander verbundenen Schenkeln und einer Schraube aus, wobei ein freies Ende eines ersten Schenkels als zu einem zweiten Schenkel gerichteten Vorsprung aufweist, der in Funktion an einen Bereich des Federelements zwischen dem in den Führungskanal vorstehenden Ende des Federelements und dem Montageende des Federelements anliegt und wobei der zweite Schenkel eine Gewindebohrung zur Aufnahme der Schraube aufweist, deren eines Ende gegen die dem Federelement abgewandte Seitenfläche des Verschlussriegels drückbar ist.

Mit einem solchen Bügel ist in einfacher Weise eine Vorspannung des Federelements bei Ein- und Ausbau des Bremsbelags in den bzw. aus dem Belaghalter ermöglicht.

Nachfolgend werden bevorzugte Ausführungsbeispiele anhand der beiliegenden Zeichnungen näher erläutert. Es zeigen:
Es zeigen:
- Fig. 1: eine schematische isometrische Ansicht einer Bremsbelaghalterung mit über den Verschlussriegel überstülptem Bügel,
- Fig. 2: eine Seitenansicht auf die in Fig. 1 gezeigte Bremsbelaghalterung,
- Fig. 3: eine perspektivische Darstellung des Verschlussriegels mit daran angeordneter Ausführungsvariante eines Federelements,
- Fig. 4: eine schematische Längsschnittansicht entlang des Führungskanals des Belaghalters im Bereich des Verschlussriegels mit entspanntem Federelement,
- Fig. 5: eine der Fig. 4 entsprechende Darstellung mit vorgespanntem Federelement,
- Fig. 6: eine Frontansicht auf den Verschlussriegel von der dem Federelement abgewandten Seite,
- Fig. 7: eine Schnittansicht durch den Verschlussriegel durch eine in Fig. 6 durch die Linie X-X angezeigte Ebene,
- Fig. 8a u. 8b: zwei schematische perspektivische Ansichten eines Bügels zur Vorspannung des Federelements,
- Fig. 9: eine perspektivische Darstellung der Bremsbelaghalterung entsprechend Fig. 1 mit in der Freigabestellung aus dem Führungskanal entferntem Verschlussriegel,
- Fig. 10: eine Frontansicht auf die in Fig. 9 gezeigte Bremsbelaghalterung mit Verschlussriegel in der Freigabestellung,
- Fig. 11: eine Schnittansicht entlang einer in Fig. 10 durch die Linie Z-Z markierte Ebene,
- Fig. 12: eine perspektivische Darstellung eines Verschlussriegels mit daran angebrachter Ausführungsvariante eines Federelements,
- Fig. 13: eine Schnittansicht durch den Verschlussriegel und das Federelement gemäß Fig. 12 und
- Fig. 14: eine Ansicht von oben auf den Verschlussriegel und das Federelement aus Fig. 12.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Belaghalters, der Andruckplatte, des Bremsbelags, des Federelements, des Verschlussriegels und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

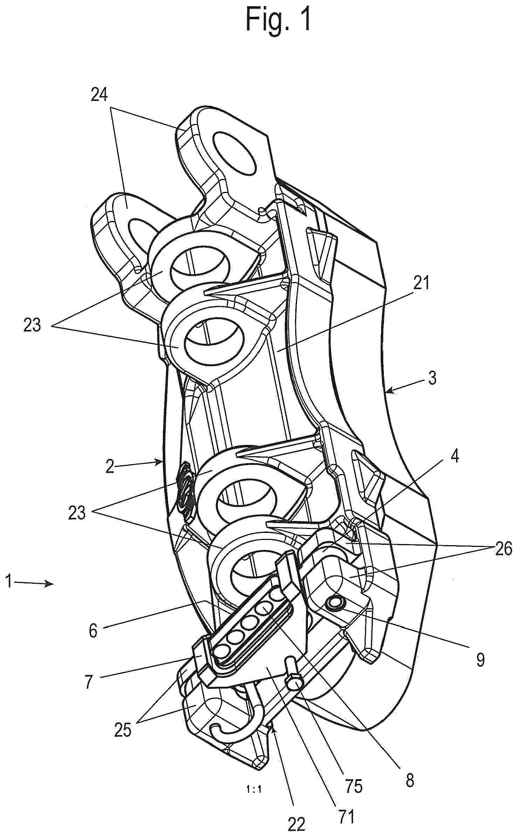

In **Fig. 1** ist mit dem Bezugszeichen 1 insgesamt eine Ausführungsvariante einer erfindungsgemäßen Bremsbelaghalterung für ein Schienenfahrzeug bezeichnet. Die Bremsbelaghalterung 1 weist einen Belaghalter 2 und einen an dem Belaghalter 2 arretiert gehaltenen Bremsbelag 3 auf.

Der Belaghalter 2 weist eine Andruckplatte 21 mit einem sich in Längsrichtung des Belaghalters 2 erstreckenden Führungskanal 22 auf. In diesem Führungskanal 22 ist der Bremsbelag 3 verschiebbar und senkrecht zur Normalen der Andruckplatte 21 formschlüssig festlegbar.

Zur formschlüssigen Festlegung senkrecht zur Normalen der Andruckplatte 21 ist auf einer der Andruckplatte 21 zugewandten Fläche eines Reibbelags 31 des Bremsbelags 3 ein Führungssteg 32 angeordnet oder angeformt. Der Führungssteg 32 und der Führungskanal 22 sind dabei bevorzugt in Gestalt einer Schwalbenschwanzführung geformt, so dass der Bremsbelag 3 in Längsrichtung des Führungskanals 22 mit dem Führungssteg 32 in den Führungskanal 22 eingeschoben werden kann und durch die Schwalbenschwanzführung senkrecht zur Normalen der Andruckplatte 21 formschlüssig fixiert ist. Zur Fixierung des Bremsbelags 3 in Richtung der Längsachse des Führungskanals 22 endet der Führungskanal 22 an einem Ende mit einem Anschlag, an den eine entsprechende Stirnfläche des Führungsstegs 32 des Bremsbelags 3 andrückbar ist.

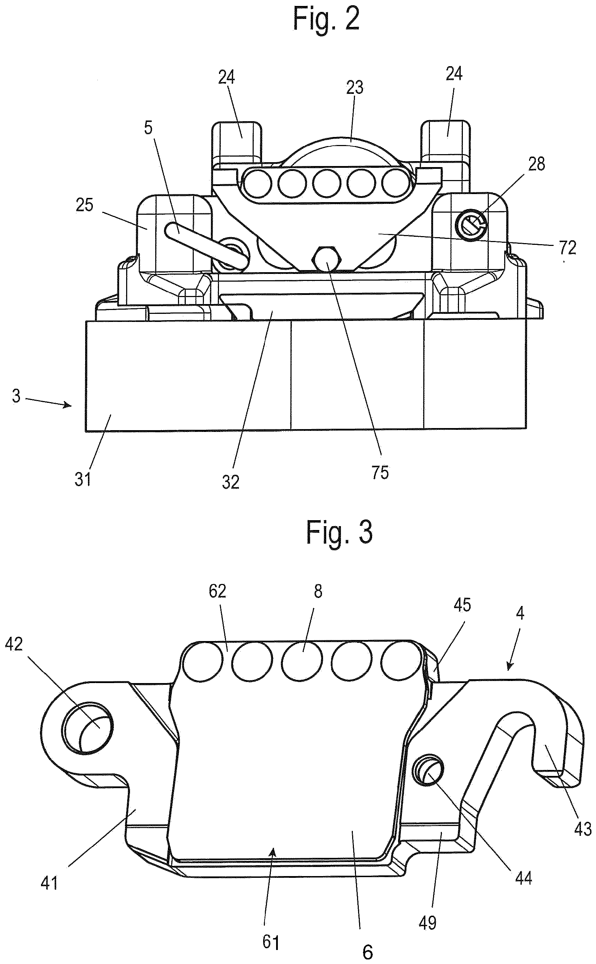

Im Bereich des anderen, in **Fig. 2** gezeigten Ende des Führungskanals 22, an dem der Bremsbelag 3 in den Führungskanal 22 einsetzbar ist, ist ein hier schwenkbar an der Andruckplatte 21 gelagerter Verschlussriegel 4 zur Arretierung des Bremsbelags 3 in Längsrichtung des Belaghalters 2 angeordnet.

Denkbar ist prinzipiell auch ein verschiebbar an der Andruckplatte 21 gelagerter Verschlussriegel 4, der an einer am Belaghalter 2 angeformten Führung geführt in den Bereich des Führungskanals 22 einschiebbar ist.

Der beispielhaft in **Fig. 3** gezeigte verschwenkbar gehaltene Verschlussriegel 4 weist eine Schwenkachsenaufnahme 42 auf, in der ein in einem Drehlager 25 des Belaghalters 2 aufgenommener Lagerbolzen 28 aufgenommen ist, so dass der Verschlussriegel 4 um eine sich im Wesentlichen in Richtung der Längserstreckung des Belaghalters 2 erstreckende Schwenkachse verschwenkbar am Belaghalter 2 gehalten ist.

An einem der Schwenkachse des Verschlussriegels 4 entfernten Bereich ist ein weiteres Lager 25 mit einem Zwischenlager angeformten Schlitz am Belaghalter 2 angeformt.

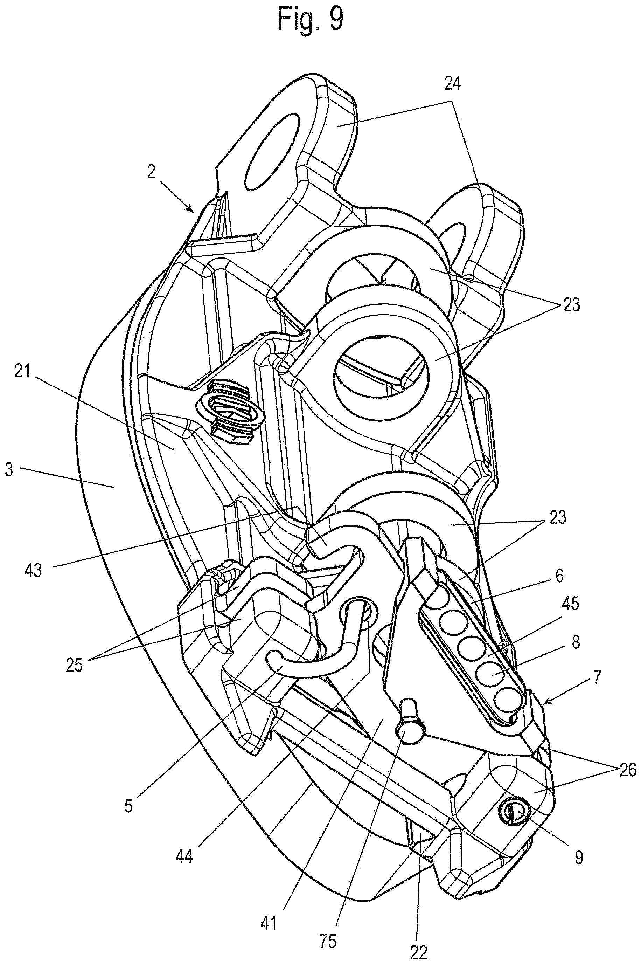

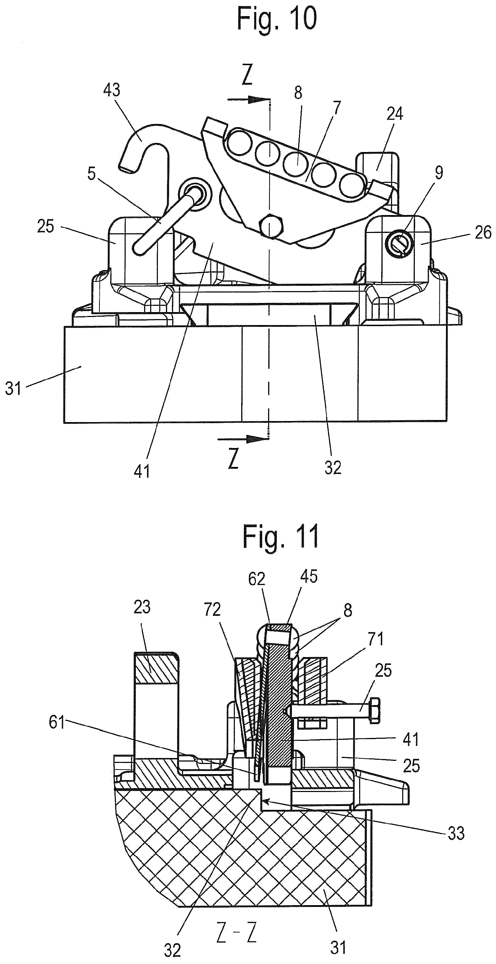

Dieses Lager 25 weist ebenfalls eine Durchgangsbohrung auf, in der ein Bügel 5 schwenkbar gelagert ist, der eine Bügelaufnahme 44 des Verschlussriegels 4 durchtritt. So kann der Verschlussriegel 4 von einer in Fig. 2 gezeigten Verriegelungsstellung in eine in **Fig. 9** **und** **10** gezeigte Freigabestellung, in der der Bremsbelag 3 aus dem Führungskanal 22 des Belaghalters 2 heraus- oder hineingeschoben werden kann, geführt werden.

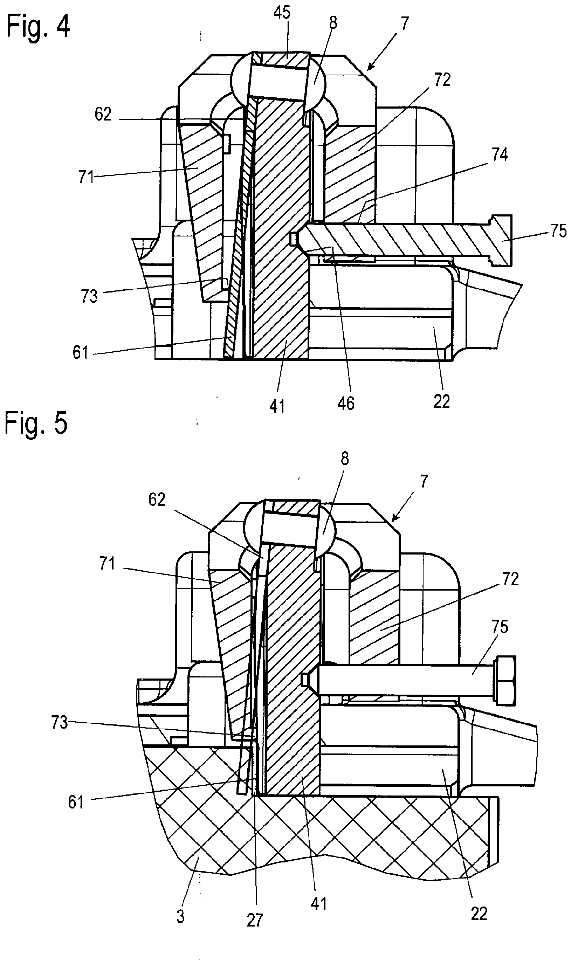

Wie in den **Fig. 4 und 5** zu erkennen ist, ist zwischen einem in dem Führungskanal 22 geführten Führungssteg 32 des Bremsbelags 3 und dem Verschlussriegel 4 ein den Bremsbelag 3 im Führungskanal 22 vorspannendes Federelement 6 angeordnet.

Das Federelement 6 ist dabei bevorzugt als Blattfeder ausgebildet. Denkbar dabei ist, je nach gewünschter Federelastizität das Federelement 6 als ein- oder mehrlagige Blattfeder auszubilden.

Zur Einstellung der gewünschten Vorspannung ist es auch denkbar, die Materialdicke des als Blattfeder ausgebildeten Federelements 6 zu variieren.

Wie in den **Fig. 3 bis 7** des Weiteren dargestellt ist, weist der Verschlussriegel 4 einen zu einer Schwenkebene des Verschlussriegels 4 abgewinkelten Montagebereich 45 auf, an dem ein Montageende 62 des Federelements 6 anliegend befestigt ist.

Ein in den Führungskanal 22 vorstehendes Ende 61 liegt dabei unter Vorspannung am Führungssteg 32 des Bremsbelags 3 an, wie es in Fig. 5 beispielhaft dargestellt ist.

Das Montageende 62 des Federelements 6 ist dabei bevorzugt am Montagebereich 45 des Verschlussriegels 4 mit einer oder mehreren Nieten 8 angenietet.

Denkbar ist auch, das Federelement 6 stoffschlüssig, beispielsweise durch Verschweißen am Montagebereich 45 des Verschlussriegels 4 zu fixieren.

Durch die Anbringung an dem abgewinkelten Montagebereich 45 des Verschlussriegels 4 ist das Federelement 6 im Falle eines als ebene Blattfeder ausgebildete Federelements 6 derart am Verschlussriegel 4 festgelegt, dass das in der Montagestellung in den Führungskanal 22 vorstehende Ende 61 vom unteren als Sperrleiste 41 bezeichneten Ende des Verschlussriegels 4 absteht. Um zur Montage des Bremsbelags 3 am Belaghalter 2 den Verschlussriegel 4 aus den in den Fig. 9 oder 10 gezeigten Freigabestellung in die in den Fig. 1 oder 2 gezeigte Verriegelungsstellung zu verschwenken, muss, wie in Fig. 5 dargestellt, das in den Führungskanal 22 vorstehende Ende 61 des Federelements 6 an die Sperrleiste 41 des Verschlussriegels 4 angedrückt werden.

Dazu ist gemäß einer bevorzugten Ausführungsvariante ein Montagebügel 7 vorgesehen, der über den Verschlussriegel 4 und das an diesem fixierte Federelement 6 übergestülpt wird.

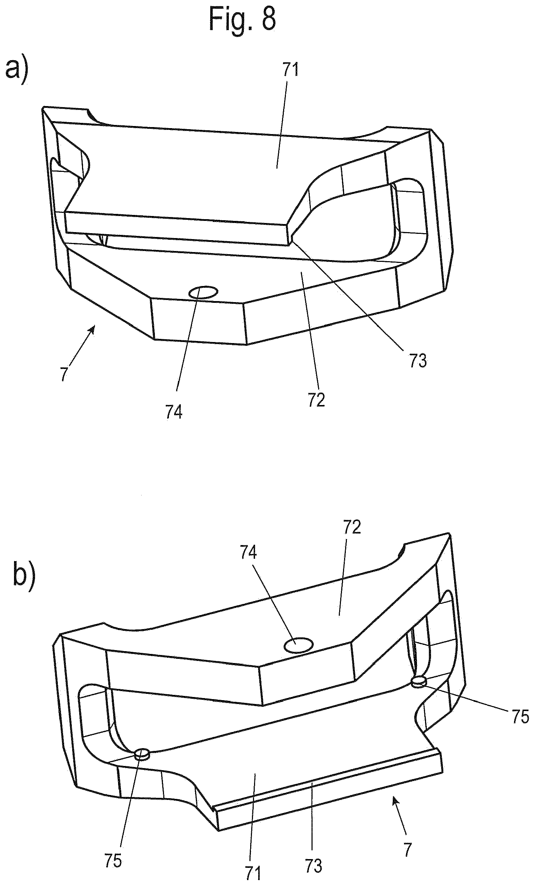

Der Montagebügel 7 weist, wie in den Fig. 4, 5 und 8a) und b) gezeigt ist, zwei über eine Brücke miteinander verbundene Schenkeln 71, 72 auf sowie eine Schraube 75.

An dem über dem Führungssteg 32 des Bremsbelags 3 positionierten ersten Schenkel 71 erstreckt sich von dessen freien Ende ein zu dem zweiten Schenkel 72 gerichteter Vorsprung 73, beispielsweise in Gestalt eines Steges, der, wie in den Fig. 4 und 5 gezeigt, an einem Bereich des Federelements 6 zwischen dem in den Führungskanal 22 vorstehenden Ende 61 des Federelements 6 und dem Montageende 62 des Federelements 6 anliegt.

Der zweite Schenkel 72 weist eine Gewindebohrung 74 zur Aufnahme der Schraube 75 auf. Das eine Ende dieser Schraube 75 wird dabei zur Vorspannung des Federelements 6 gegen die dem Federelement 6 abgewandte Seitenfläche des Verschlussriegels 4 gedrückt.

Um ein Verkanten der Schraube 75 dabei zu verhindern, weist die dem Federelement 6 abgewandte Seitenfläche des Verschlussriegels 4 bevorzugt eine Aussparung 46 auf, die der Aufnahme des freien Endes der Schraube 75 dient.

Wird die Schraube 75 angezogen, wird der Montagebügel 7 in Richtung des Schraubenkopfs der Schraube 75 gezogen, da der Verschlussriegel 4 in Längsrichtung des Führungskanals 22 in dem Drehlager 26 und dem Lager 25 fixiert ist.

Durch das Verschieben des Montagebügels 7 in Richtung des Schraubenkopfs der Schraube 75 wird das freie Ende 61 des Federelements 6 gegen die Seitenfläche des Verschlussriegels 4 gedrückt, so dass der Verschlussriegel 4 vollends in die Verriegelungsstellung eingeschwenkt werden kann.

Ein Spalt 27 zwischen der Sperrleiste 41 des Verschlussriegels 4 und der dem Verschlussriegel 4 zugewandten Stirnseite des Führungsstegs 32 des Bremsbelags 3 definiert dabei das Spiel des Bremsbelags 3 in Längsrichtung des Führungskanals 22, das einerseits durch die Materialdicke des in diesem Spalt eingeschobenen Federelements 6 verringert wird, wobei das verbleibende Spiel nach Lösen des Montagebügels von dem Verschlussriegel 4 dadurch überwunden wird, dass durch die Federkraft des als Blattfeder ausgebildeten Federelements 6 das Federelement 6 stets in Anlage zum Bremsbelag 3 verbleibt und so ein Verschieben des Bremsbelags 3 im Betrieb verhindert bzw. minimiert.

Die Niete 8 sind in den Fig. 4 und 5 gezeigt in dafür vorgesehenen Bohrungen 47 im Montagebereich 45 des Verschlussriegels 4 und entsprechenden Bohrungen im Montageende 62 des Federelements 6 angeordnet.

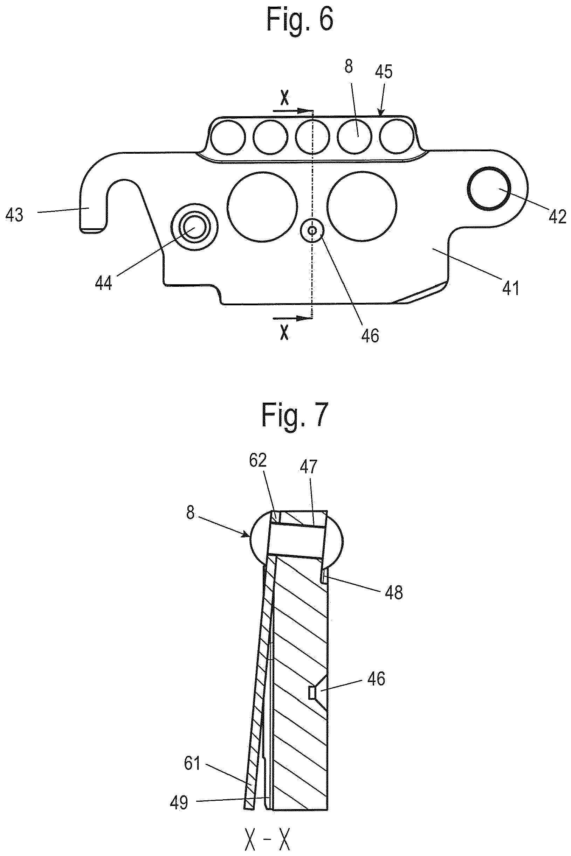

Wie in Fig. 3 und 7 des Weiteren gezeigt, ist der Bereich der Sperrleiste 41 des Verschlussriegels 4 bevorzugt mit einer Stufe 49 geformt, in die das freie Ende 61 des Federelements 6 im Bedarfsfall eindrückbar ist.

Fig. 11 zeigt das Federelement 6 im entspannten Zustand bei in der Freigabestellung positioniertem Verschlussriegel 4.

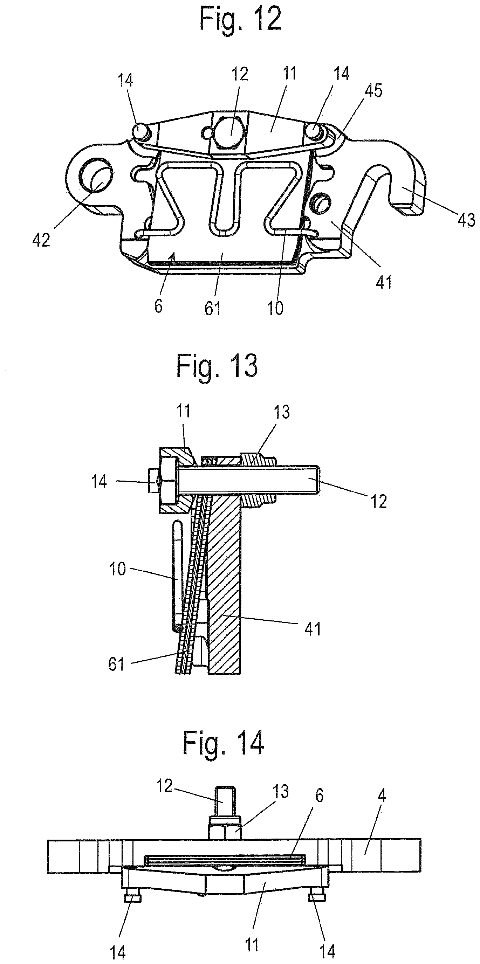

In den **Fig. 12 bis 14** ist eine alternative Ausführungsvariante einer Anordnung eines solchen Federelements 6 am Verschlussriegel 4 dargestellt.

Bei der hier gezeigten Ausführungsvariante ist das hier ebenfalls als Blattfeder ausgebildete Federelement 6 mithilfe einer Drahtfeder 10 an einer parallel zur Schwenkebene des Verschlussriegels 4 verlaufenden Fläche des Verschlussriegels 4 vorfixiert.

Im Montagebereich 45 des Verschlussriegels 4 ist eine Schraube 12 vorgesehen, die ein sich über die Breite des Federelements 6 erstreckendes Spannelement 11 gegen das Montageende 62 des Federelements 6 drückt.

Auf der dem Federelement 6 abgewandten Seite des Verschlussriegels 4 ist die Schraube 12 mit einer Mutter 13 gehalten.

Zur Einschwenkung des Verschlussriegels 4 in die Verriegelungsstellung wird hier die Schraube 12 zunächst nur so weit in die Mutter 13 eingedreht, dass das Federelement 6 noch parallel zur Seitenfläche des Verschlussriegels 4 ausgerichtet ist.

In dieser Stellung kann die Sperrleiste 41 des Verschlussriegels 4 samt Federelement 6 in den Spalt 27 vor der Anschlagkante 33 des Führungssteges 32 des Bremsbelags 3 eingeschwenkt werden.

Nach erfolgtem Einschwenken wird die Schraube 12 weiter angezogen, so dass das Montageende 62 des Federelements 6 gegen den abgewinkelten Montagebereich 45 des Verschlussriegels 4 angedrückt wird und dabei die Blattfeder unter Vorspannung setzt, so dass deren freies Ende 61 wiederum gegen die Anschlagkante 33 des Bremsbelags 3 drückt.

### BEZUGSZEICHENLISTE

- 1: Brembelag

- 2: Belaghalter
- 21: Andruckplatte
- 22: Führungskanal
- 23: Bremshebellagerstelle
- 24: Hängelaschenlagerstelle
- 25: Lager
- 26: Drehlager
- 27: Spalt
- 28: Schwenkbolzen

- 3: Bremsbelag
- 31: Reibbelag
- 32: Führungssteg
- 33: Anschlagkante

- 4: Verschlussriegel
- 41: Sperrleiste
- 42: Schwenkachsenaufnahme
- 43: Haken
- 44: Bügelaufnahme
- 45: Montagebereich
- 46: Aussparung
- 47: Bohrung
- 48: Abschrägung
- 49: Stufe

- 5: Bügel

- 6: Federelement
- 61: freies Ende
- 62: Montageende

- 7: Montagebügel
- 71: erster Schenkel
- 72: zweiter Schenkel
- 73: Andruckstück
- 74: Bohrung
- 75: Andruckstück

- 8: Niet
- 9: Schwenkachse
- 10: Drahtfeder
- 11: Spannelement
- 12: Schraube
- 13: Mutter
- 14: Bolzen

## Patentansprüche

1. Belaghalter (2) für eine Bremsbelaghalterung (1) eines Schienenfahrzeugs, aufweisend
eine Andruckplatte (21) mit einem sich in Längsrichtung des Belaghalters (2) erstreckenden Führungskanal (22), in dem ein Bremsbelag (3) verschiebbar und senkrecht zur Normalen der Andruckplatte (21) formschlüssig festlegbar ist,
einen an der Andruckplatte (21) gelagerten Verschlussriegel (4) zur Arretierung des Bremsbelags (3) in Längsrichtung des Belaghalters (2), der in einer den Bremsbelag (3) in einer Funktionsstellung fixierenden Verriegelungsstellung in den Führungskanal (22) vorsteht und in einer Freigabestellung aus dem Führungskanal (22) entfernt ist,
wobei zwischen einem in dem Führungskanal (22) geführten Führungssteg (32) des Bremsbelags (3) und dem Verschlussriegel (4) ein den Bremsbelag (3) im Führungskanal (22) vorspannendes Federelement (6) angeordnet ist,
**dadurch gekennzeichnet, dass**
der Verschlussriegel (4) einen zu einer Schwenk- oder Verschiebeebene des Verschlussriegels (4) abgewinkelten Montagebereich (45) aufweist, an dem ein Montageende (62) des Federelements (6) anliegend befestigt ist, wobei ein in den Führungskanal (22) vorstehendes Ende (61) des Federelements (6) unter Vorspannung am Führungssteg (32) des Bremsbelags (3) anliegt.

2. Belaghalter (2) nach Anspruch 1,
**dadurch gekennzeichnet, dass**
das Federelement (6) am Verschlussriegel (4) fixiert ist.

3. Belaghalter (2) nach Anspruch 1 oder 2,
**dadurch gekennzeichnet, dass**
das Federelement (6) als Blattfeder ausgebildet ist.

4. Belaghalter (2) nach einem der vorhergehenden Ansprüche,
**dadurch gekennzeichnet, dass**
das Federelement (6) als mehrlagige Blattfeder ausgebildet ist.

5. Belaghalter (2) nach einem der vorstehenden Ansprüche,
**dadurch gekennzeichnet, dass**
das Montageende (62) des Federelements (6) am Montagebereich (45) des Verschlussriegels (4) angenietet oder stoffschlüssig befestigt ist.

6. Belaghalter (2) nach einem der Ansprüche 1 bis 4,
**dadurch gekennzeichnet, dass**
das Montageende (62) des Federelements (6) am Montagebereich (45) des Verschlussriegels (4) angeschraubt ist.

7. Belaghalter (2) nach Anspruch 6,
**dadurch gekennzeichnet, dass**
das als ein- oder mehrlagige Blattfeder ausgebildete Federelement (6) mit einer am Verschlussriegel (4) fixierten Drahtfeder (10) an einer parallel zur Schwenk- oder Verschiebeebene des Verschlussriegels (4) verlaufenden Fläche vorfixiert und mittels wenigstens einer das Montageende (62) des Federelements (6) mit dem Montagebereich (45) des Verschlussriegels (4) verbindenden Schraube (12) in eine vorgespannte Stellung, bei der das in den Führungskanal (22) vorstehende Ende (61) des Federelements (6) unter Vorspannung am Führungssteg (32) des Bremsbelags (3) anliegt, angezogen ist.

8. Vorrichtung zum Vorspannen eines Federelements (6) eines Belaghalters (2) gemäß einem der vorstehenden Ansprüche,
**gekennzeichnet durch**
einen auf den Verschlussriegel (4) und das an diesem fixierte Federelement (6) überstülpbaren Bügel (7) mit zwei über eine Brücke miteinander verbundenen Schenkeln (71, 72) und einer Schraube (75), wobei ein freies Ende eines ersten Schenkels (71) als zu einem zweiten Schenkel (72) gerichteten Vorsprung (73) aufweist, der in Funktion an einen Bereich des Federelements (6) zwischen dem in den Führungskanal (22) vorstehenden Ende (61) des Federelements (6) und dem Montageende (62) des Federelements (6) anliegt und wobei der zweite Schenkel (72) eine Gewindebohrung (74) zur Aufnahme der Schraube (75) aufweist, deren eines Ende gegen die dem Federelement (6) abgewandte Seitenfläche des Verschlussriegels (4) drückbar ist.

9. Bremsbelaghalterung (1) für ein Schienenfahrzeug, aufweisend
einen Belaghalter (2),
einen an dem Belaghalter (2) arretiert gehaltenen Bremsbelag (3),
**dadurch gekennzeichnet, dass**
der Belaghalter (2) gemäß einem der vorstehenden Ansprüche 1 bis 7 ausgebildet ist.

## Claims

1. Lining holder (2) for a brake lining support (1) of a rail vehicle, having
a pressure plate (21) having a guiding duct (22) extending in longitudinal direction of the lining holder (2), in which a brake lining (3) can be form-fittingly fixed so as to be displaceable and perpendicular to the normal of the pressure plate (21),
a locking bar (4) mounted at the pressure plate (21) for locking the brake lining (3) in longitudinal direction of the lining holder (2), which in a locking position fixing the brake lining (3) in a functional position projects into the guiding duct (22) and which in a release position is removed from the guiding duct (22),
wherein between a guiding web (32) of the brake lining (3) guided in the guiding duct (22) and the locking bar (4) is arranged a spring element (6) biasing the brake lining (3) in the guiding duct (22),
**characterised in that**
the locking bar (4) has a mounting region (45) at an angle to a pivoting or displacing plane of the locking bar (4), at which a mounting end (62) of the spring element (6) is tightly attached, wherein an end (61) of the spring element (6) protruding into the guiding duct (22) rests in a biased manner on the guiding web (32) of the brake lining (3).

2. Lining holder (2) according to claim 1,
**characterised in that**
the spring element (6) is fixed on the locking bar (4).

3. Lining holder (2) according to claim 1 or 2,
**characterised in that**
the spring element (6) is designed as a leaf spring.

4. Lining holder (2) according to any of the preceding claims,
**characterised in that**
the spring element (6) is designed as a multi-layered leaf spring.

5. Lining holder (2) according to any of the preceding claims,
**characterised in that**
the mounting end (62) of the spring element (6) is riveted or material-fittingly fastened on the mounting region (45) of the locking bar (4).

6. Lining holder (2) according to any of claims 1 to 4,
**characterised in that**
the mounting end (62) of the spring element (6) is screwed to the mounting region (45) of the locking bar (4).

7. Lining holder (2) according to claim 6,
**characterised in that**
the spring element (6) in the form of a single or multi-layered leaf spring is prefixed, using a wire spring (10) fixed to the locking bar (4), to a surface extending parallel to the pivoting or displacing plane of the locking bar (4) and is drawn by means of at least one screw (12) connecting the mounting end (62) of the spring element (6) to the mounting region (45) of the locking bar (4) into a biased position, in which the end (61) of the spring element (6) protruding into the guiding duct (22) rests in a biased manner on the guiding web (32) of the brake lining (3).

8. Device for biasing a spring element (6) of a lining holder (2) according to any of the preceding claims,
**characterised by**
a bracket (7), which can be drawn over the locking bar (4) and the spring element (6) fixed thereto, having two legs (71, 72), connected to one another via a bridge, and a screw (75), wherein a free end of a first leg (71) has a protrusion (73) aligned to a second leg (72), which in function rests on a region of the spring element (6) between the end (61) of the spring element (6) protruding into the guiding duct (22) and the mounting end (62) of the spring element (6), and wherein the second leg (72) has a threaded bore (74) for receiving the screw (75), one end of which can be pressed against the side surface of the locking bar (4) facing away from the spring element (6).

9. Brake lining support (1) for a rail vehicle, having a lining holder (2),
a brake lining (3) supported in a locked manner on the lining holder (2),
**characterised in that**
the lining holder (2) is designed according to any of the preceding claims 1 to 7.

## Revendications

1. Porte-garniture (2) pour un support de garniture de frein (1) d'un véhicule ferroviaire présentant
une plaque de pressage (21) avec un canal de guidage (22) s'étendant dans le sens longitudinal du porte-garniture (2), dans lequel une garniture de frein (3) est mobile et peut être fixé par complémentarité de formes perpendiculairement à la normale de la plaque de pressage (21),
un verrou de fermeture (4) logé au niveau de la plaque de pressage (21) pour l'arrêt de la garniture de frein (3) dans le sens longitudinal du porte-garniture (2) qui fait saillie dans une position de verrouillage fixant la garniture de frein (3) dans une position fonctionnelle dans le canal de guidage (22) et est retiré du canal de guidage (22) dans une position de libération,
dans lequel un élément de ressort (6) précontraignant la garniture de frein (3) dans le canal de guidage (22) est agencé entre une nervure de guidage (32) guidée dans le canal de guidage (22) de la garniture de frein (3) et le verrou de fermeture (4),
**caractérisé en ce que**
le verrou de fermeture (4) présente une zone de montage (45) coudée vers un plan de pivotement ou de coulissement du verrou de fermeture (4), à laquelle une extrémité de montage (62) de l'élément de ressort (6) est fixée solidement, dans lequel une extrémité (61) faisant saillie dans le canal de guidage (22) de l'élément de ressort (6) repose par précontrainte contre la nervure de guidage (32) de la garniture de frein (3).

2. Porte-garniture (2) selon la revendication 1,
**caractérisé en ce que**
l'élément de ressort (6) est fixé au verrou de fermeture (4).

3. Porte-garniture (2) selon la revendication 1 ou 2,
**caractérisé en ce que**
l'élément de ressort (6) est réalisé comme ressort à lames.

4. Porte-garniture (2) selon l'une quelconque des revendications précédentes,
**caractérisé en ce que**
l'élément de ressort (6) est réalisé comme ressort à lames à couches multiples.

5. Porte-garniture (2) selon l'une quelconque des revendications précédentes,
**caractérisé en ce que**
l'extrémité de montage (62) de l'élément de ressort (6) est rivetée ou fixée par complémentarité de matière à la zone de montage (45) du verrou de fermeture (4).

6. Porte-garniture (2) selon l'une quelconque des revendications 1 à 4,
**caractérisé en ce que**
l'extrémité de montage (62) de l'élément de ressort (6) est vissée à la zone de montage (45) du verrou de fermeture (4).

7. Porte-garniture (2) selon la revendication 6,
**caractérisé en ce que**
l'élément de ressort (6) réalisé comme un ressort à lames à une couche ou couches multiples est préfixé avec un ressort en fil (10) fixé au verrou de fermeture (4) au niveau d'une surface s'étendant parallèlement au plan de pivotement ou de coulissement du verrou de fermeture (4) et est serré au moyen d'au moins une vis (12) reliant l'extrémité de montage (62) de l'élément de ressort (6) à la zone de montage (45) du verrou de fermeture (4) dans une position précontrainte dans laquelle l'extrémité (61) faisant saillie dans le canal de guidage (22) de l'élément de ressort (6) repose par précontrainte contre la nervure de guidage (32) de la garniture de frein (3).

8. Dispositif de précontrainte d'un élément de ressort (6) d'un porte-garniture (2) selon l'une quelconque des revendications précédentes,
**caractérisé par**
un étrier (7) qui peut être passé sur le verrou de fermeture (4) et l'élément de ressort (6) fixé à celui-ci avec deux branches (71, 72) reliées entre elles par le biais d'un pont et une vis (75), dans lequel une extrémité libre d'une première branche (71) présente une saillie (73) dirigée vers une seconde branche (72), saillie qui repose en fonctionnement contre une zone de l'élément de ressort (6) entre l'extrémité (61) de l'élément de ressort (6) faisant saillie dans le canal de guidage (22) et l'extrémité de montage (62) de l'élément de ressort (6) et dans lequel la seconde branche (72) présente un alésage fileté (74) pour la réception de la vis (75) dont une extrémité peut être pressée contre la surface latérale du verrou de fermeture (4) éloignée de l'élément de ressort (6).

9. Support de garniture de frein (1) pour un véhicule ferroviaire présentant un porte-garniture (2),
une garniture de frein (3) maintenue de manière bloquée contre le porte-garniture (2),
**caractérisé en ce que**
le porte-garniture (2) est réalisé selon l'une quelconque des revendications 1 à 7.
